# EUROPEAN PATENT APPLICATION

(11) **EP 4 672 024 A1**
(43) Date of publication of application: **31.12.2025**
(21) Application number: 24212919.5
(22) Date of filing: 14.11.2024
(51) Int. Cl.: G06F 16/3329, G06F 16/93

(54) **INFORMATION PROCESSING SYSTEM AND INFORMATION PROCESSING PROGRAM**

(30) Priority: 24.06.2024 JP 2024101500
(71) Applicant: FUJIFILM Business Innovation Corp., Minato-ku Tokyo (JP)
(72) Inventor: IKEDA, Junya, Yokohama-shi, Kanagawa (JP)
(74) Representative: Kurig, Thomas

(57) **Abstract**

An information processing system includes a processor configured to: receive question data input from a user; in generation of answer data to the question data using file data to which it is preset whether or not the user has an access right, in a case where access to the file data is restricted or prohibited by the access right of the user, control the use of the file data in the generation of the answer data independently of control of the access right to generate the answer data; and present the answer data to the user.

## Description

### BACKGROUND OF THE INVENTION

### (i) Field of the Invention

The present disclosure relates to an information processing system and an information processing program.

### (ii) Description of Related Art

JP2017-207943A discloses a file management system having a mandatory access control environment in which access to a file is restricted according to a label given by an administrator. The file management system disclosed in JP2017-207943A includes: a receiving unit that receives a file update request based on an instruction from a user; a determination unit that determines whether or not to permit automatic update of a file related to the update request on the basis of user authority given to a user related to the update request, a label given from an administrator to the file related to the update request, and a degree of urgency of the update; and a temporary label giving unit that gives a temporary label to the file related to the update request in a case where the automatic update is permitted as a result of the determination by the determination unit.

### SUMMARY OF THE INVENTION

However, a case is considered where, in generation of an answer to a question, the answer is generated using file data related to the question. In this situation, in a case where the use of the file data is restricted according to the access right of the user, who has asked the question, to the file data in the generation of the answer, the answer that the user wants may not be obtained.

An object of the present disclosure is to provide an information processing system and an information processing program that, in a case where an answer to a question is generated using file data, can improve flexibility in the generation of the answer, as compared to a case where the generation of the answer is restricted according to an access right of a user, who has asked the question, to the file data.

According to a first aspect of the present disclosure, there is provided an information processing system including a processor configured to: receive question data input from a user; in generation of answer data to the question data using file data to which it is preset whether or not the user has an access right, in a case where access to the file data is restricted or prohibited by the access right of the user, control the use of the file data in the generation of the answer data independently of control of the access right to generate the answer data; and present the answer data to the user.

According to a second aspect of the present disclosure, in the information processing system according to the first aspect, the user may be a first user, and the processor may be configured to: in a case where file data related to the question data is acquired from a database, acquire the file data related to the question data from the database regardless of the access right; generate answer data to the question data using the acquired file data; present the answer data to the first user in a case where at least one of the acquired file data is file data to which the first user does not have an access right and the presentation of the answer data to the first user is permitted by a second user or a system; and present the answer data to the first user in a case where the acquired file data is file data to which the first user has an access right.

According to a third aspect of the present disclosure, in the information processing system according to the first aspect or the second aspect, the user may be a first user, and the processor may be configured to: present the answer data to a second user after generating the answer data; regenerate answer data to the question data according to instruction data input from the second user; and present the regenerated answer data to the first user.

According to a fourth aspect of the present disclosure, in the information processing system according to the third aspect, the instruction data may be abstraction level data for an instruction to change an abstraction level of the answer data, and the processor may be configured to: regenerate answer data to the question data according to the abstraction level data; and present the regenerated answer data to the first user.

According to a fifth aspect of the present disclosure, in the information processing system according to the third aspect, the instruction data may be use file change data for an instruction to change the file data used in the generation of the answer data or to change a range of use in the file data, and the processor may be configured to: regenerate answer data to the question data according to the use file change data; and present the regenerated answer data to the first user.

According to a sixth aspect of the present disclosure, in the information processing system according to the fourth aspect, the processor may be configured to: display a range slider for inputting a change in the abstraction level of the answer data on a display unit; and acquire the abstraction level data input from the second user through the range slider.

According to a seventh aspect of the present disclosure, in the information processing system according to the fifth aspect, the processor may be configured to: display a range slider for inputting a change in the file data used in the generation of the answer data or a change in the range of use in the file data on a display unit; and acquire the use file change data input from the second user through the range slider.

According to an eighth aspect of the present disclosure, in the information processing system according to the fourth aspect, the processor may be configured to: display an option button for inputting a change in the abstraction level of the answer data on a display unit; and acquire the abstraction level data input from the second user through the option button.

According to a ninth aspect of the present disclosure, in the information processing system according to the fifth aspect, the processor may be configured to: display an option button for selecting the file data used in the generation of the answer data on a display unit; and acquire the use file change data input from the second user through the option button.

According to a tenth aspect of the present disclosure, in the information processing system according to any one of the third to ninth aspects, the processor may be configured to: in a case where the answer data is regenerated, refer to setting data related to the regeneration of the answer data; in a case where the setting data indicates that the answer data is regenerated according to a preset condition, regenerate the answer data according to the preset condition without presenting the answer data to the second user; and present the regenerated answer data to the first user.

According to an eleventh aspect of the present disclosure, in the information processing system according to the fifth aspect or the seventh aspect, the processor may be configured to, in a case where the use file change data is changed, update past answer data according to the changed use file change data.

According to a twelfth aspect of the present disclosure, there is provided an information processing program causing a computer to execute a process including: receiving question data input from a user; in generation of answer data to the question data using file data to which it is preset whether or not the user has an access right, in a case where access to the file data is restricted or prohibited by the access right of the user, controlling the use of the file data in the generation of the answer data independently of control of the access right to generate the answer data; and presenting the answer data to the user.

According to a thirteenth aspect of the present disclosure, there is provided an information processing system including a processor configured to: receive question data input from a user; in generation of answer data to the question data using file data to which it is preset whether or not the user has an access right, control the use of the file data in the generation of the answer data independently of control of an access right in execution of a process of searching a database, in which the file data is stored, to generate the answer data; and present the answer data to the user.

According to a fourteenth aspect of the present disclosure, in the information processing system according to the thirteenth aspect, the user may be a first user, and the processor may be configured to: in a case where file data related to the question data is acquired from the database, search the database regardless of the access right to acquire the file data related to the question data; generate answer data to the question data using the acquired file data; present the answer data to the first user in a case where at least one of the acquired file data is file data to which the first user does not have an access right and the presentation of the answer data to the first user is permitted by a second user or a system; and present the answer data to the first user in a case where the acquired file data is file data to which the first user has an access right.

According to a fifteenth aspect of the present disclosure, there is provided an information processing program causing a computer to execute a process including: receiving question data input from a user; in generation of answer data to the question data using file data to which it is preset whether or not the user has an access right, controlling the use of the file data in the generation of the answer data independently of control of an access right in execution of a process of searching a database, in which the file data is stored, to generate the answer data; and presenting the answer data to the user.

According to the first aspect, the twelfth aspect, the thirteenth aspect, or the fifteenth aspect, in a case where the answer to the question is generated using the file data, it is possible to improve flexibility in the generation of the answer, as compared to a case where the generation of the answer is restricted according to the access right of the user, who has asked the question, to the file data.

According to the second aspect or the fourteenth aspect, it is possible to generate the answer using a larger amount of file data.

According to the third aspect, the answer checked by a user different from the user who has asked the question can be presented to the user who has asked the question.

According to the fourth aspect, it is possible to generate the answer data whose abstraction level has been changed in response to an instruction from a user different from the user who has asked the question.

According to the fifth aspect, it is possible to change the file data used in the generation of the answer data in response to an instruction from a user different from the user who has asked the question.

According to the sixth aspect, in a case of changing the abstraction level of the answer data, a user different from the user who has asked the question can more easily change the abstraction level of the answer data.

According to the seventh aspect, in a case of changing the file data used to generate the answer data, a user different from the user who has asked the question can more easily change the file data used to generate the answer data.

According to the eighth aspect, in a case of changing the abstraction level of the answer data, a user different from the user who has asked the question can more easily change the abstraction level of the answer data.

According to the ninth aspect, in a case of changing the file data used to generate the answer data, a user different from the user who has asked the question can more easily change the file data used to generate the answer data.

According to the tenth aspect, it is possible to reduce the frequency with which a user different from the user who has asked the question checks the regeneration of the answer data.

According to the eleventh aspect, the user who has asked the question can check the past answer data updated according to a newly set access right.

### BRIEF DESCRIPTION OF THE DRAWINGS

Exemplary embodiment(s) of the present invention will be described in detail based on the following figures, wherein:
Fig. 1 is a diagram showing a schematic configuration of a question answering system according to an exemplary embodiment;
Fig. 2 is a block diagram showing an example of hardware configurations of an information processing apparatus, a first terminal, and a second terminal according to the exemplary embodiment;
Fig. 3 is a block diagram showing an example of a functional configuration of the information processing apparatus;
Fig. 4 is a diagram showing an example of data stored in a user data storage unit;
Fig. 5 is a flowchart showing an example of a flow of information processing by the information processing apparatus according to the exemplary embodiment;
Fig. 6 is a diagram showing an example of a screen displayed on a display unit of the first terminal;
Fig. 7 is a diagram showing an example of a screen displayed on a display unit of the second terminal;
Fig. 8 is a diagram showing an example of a screen displayed on the display unit of the second terminal;
Fig. 9 is a diagram showing an example of a screen displayed on the display unit of the second terminal;
Fig. 10 is a diagram showing an example of a screen displayed on the display unit of the second terminal;
Fig. 11 is a diagram showing an example of a screen displayed on the display unit of the second terminal;
Fig. 12 is a diagram showing an example of a screen displayed on the display unit of the first terminal; and
Fig. 13 is a diagram showing an example of a management screen.

### DETAILED DESCRIPTION OF THE INVENTION

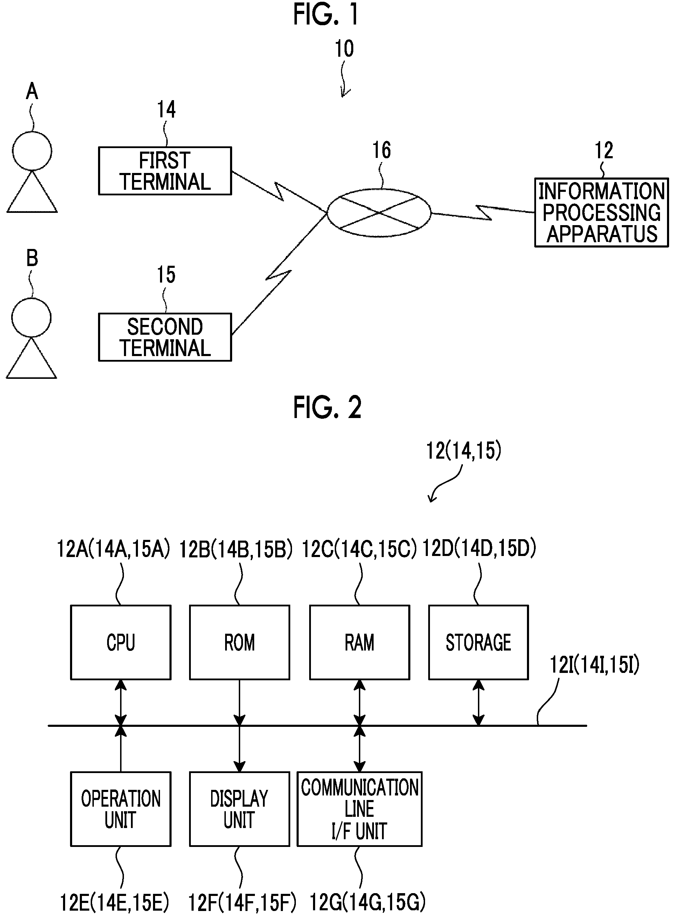

Hereinafter, an example of the present exemplary embodiment will be described in detail with reference to the drawings. In the present exemplary embodiment, a question answering system in which a terminal, an information processing apparatus, and the like are connected to each other via communication lines, such as various networks, will be described as an example. Fig. 1 is a diagram showing a schematic configuration of a question answering system 10 according to the present exemplary embodiment.

As shown in Fig. 1, the question answering system 10 according to the present exemplary embodiment includes an information processing apparatus 12, a first terminal 14, a second terminal 15, and the like. The information processing apparatus 12, the first terminal 14, and the second terminal 15 are connected to each other via a communication line 16 such as a local area network (LAN), a wide area network (WAN), the Internet, or an intranet. Then, the information processing apparatus 12, the first terminal 14, and the second terminal 15 can mutually transmit and receive various types of data via the communication line 16. In addition, the first terminal 14 is operated by a first user A. Further, the second terminal 15 is operated by a second user B.

Furthermore, in Fig. 1, one information processing apparatus 12, one first terminal 14, and one second terminal 15 are shown. However, each or some of the apparatuses may be plural in number.

A configuration of a main portion of an electric system of the information processing apparatus 12, the first terminal 14, and the second terminal 15 according to the present exemplary embodiment will be described. Fig. 2 is a block diagram showing the configuration of the main portion of the electric system of the information processing apparatus 12, the first terminal 14, and the second terminal 15 in the question answering system 10 according to the present exemplary embodiment. In addition, since the information processing apparatus 12, the first terminal 14, and the second terminal 15 have a general computer configuration, the information processing apparatus 12 will be described below as a representative.

As shown in Fig. 2, the information processing apparatus 12 according to the present exemplary embodiment includes a CPU 12A as an example of a processor, a ROM 12B, a RAM 12C, a storage 12D, an operation unit 12E, a display unit 12F, and a communication line interface (I/F) unit 12G. The CPU 12A controls the overall operation of the information processing apparatus 12. Various control programs, various parameters, and the like are stored in advance in the ROM 12B. The RAM 12C is used as a work area or the like in a case where various programs are executed by the CPU 12A. Various types of data, application programs, and the like are stored in the storage 12D. The operation unit 12E is used to input various types of information. The display unit 12F is used for displaying various types of information. The communication line I/F unit 12G is connected to the communication line 16, and transmits and receives various types of data to and from another apparatus connected to the communication line 16. In addition, the communication line I/F unit 12G may be configured to directly communicate with each apparatus using various types of known wireless communication. The units of the information processing apparatus 12 are electrically connected to each other by a system bus 121. Further, in the information processing apparatus 12 according to the present exemplary embodiment, the storage 12D is applied as a storage unit, and a non-volatile storage unit, such as a hard disk drive (HDD) or a flash memory, is applied as an example of the storage.

With the above configuration, the information processing apparatus 12 according to the present exemplary embodiment executes each of access to the ROM 12B, the RAM 12C, and the storage 12D, acquisition of various types of data through the operation unit 12E, and display of various types of information on the display unit 12F using the CPU 12A. In addition, the information processing apparatus 12 controls the transmission and reception of communication data via the communication line I/F unit 12G using the CPU 12A.

Further, similarly, the first terminal 14 according to the present exemplary embodiment executes each of access to a ROM 14B, a RAM 14C, and a storage 14D, acquisition of various types of data through an operation unit 14E, and display of various types of information on a display unit 14F using a CPU 14A. Further, the first terminal 14 controls the transmission and reception of the communication data via the communication line I/F unit 14G using the CPU 14A.

Furthermore, similarly, the second terminal 15 according to the present exemplary embodiment executes each of access to the ROM 15B, the RAM 15C, and the storage 15D, acquisition of various types of data via the operation unit 15E, and display of various types of information on the display unit 15F using the CPU 15A. Further, the second terminal 15 controls the transmission and reception of communication data via the communication line I/F unit 15G using the CPU 15A.

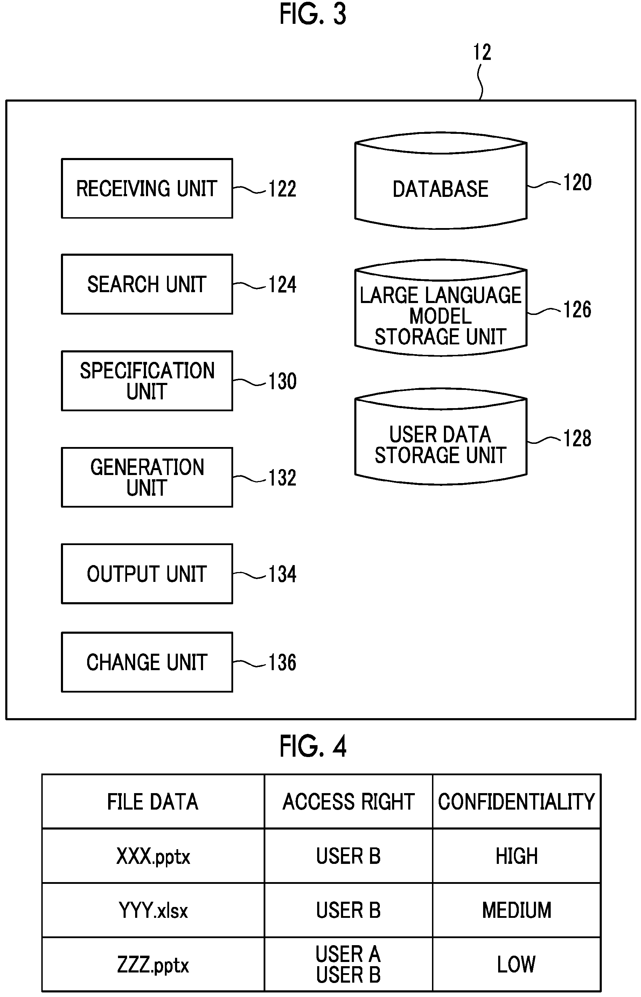

Next, a functional configuration of the information processing apparatus 12, which is an example of the information processing system according to the present disclosure, will be described. Fig. 3 is a block diagram showing an example of the functional configuration of the information processing apparatus 12.

As shown in Fig. 3, the information processing apparatus 12 is functionally configured to include a database 120, a receiving unit 122, a search unit 124, a large language model storage unit 126, a user data storage unit 128, a specification unit 130, a generation unit 132, an output unit 134, and a change unit 136.

The information processing apparatus 12 searches for file data stored in the database 120 according to question data transmitted from the first terminal 14 operated by the first user A and generates answer data to the question data on the basis of the file data obtained as a search result. In addition, in a case of generating the answer data to the question data, the information processing apparatus 12 refers to data related to an access right of the user stored in the user data storage unit 128. Then, the information processing apparatus 12 generates the answer data to the question data using the file data, which is the search result, or a preset range in the file data according to the access right of the first user A.

In a case where answer data exceeding the access right data of the first user A is generated, the information processing apparatus 12 outputs a notification signal to the second terminal 15 operated by the second user B to inquire whether or not the generated answer data is to be presented to the first user A. In a case where the second user B determines that it is not possible to present the generated answer data to the first user A, the second user B operates the second terminal 15 to cause the information processing apparatus 12 to regenerate the answer data to the question data. Then, the information processing apparatus 12 transmits the regenerated answer data to the first terminal 14.

Therefore, in a case where the access to the file data is restricted or prohibited by the access right of the first user A, the information processing apparatus 12 controls the use of the file data in the generation of the answer data, independently of the control of the access right of the first user A to the file data. The independence in the present exemplary embodiment means that there is no subordinate relationship between the access to the file data in a case where the information processing apparatus 12 generates an answer to the question of the first user A and the access to the file data by the first user A. Therefore, for example, even in a case where the access to the file data by the first user A is restricted or prohibited, the information processing apparatus 12 is permitted to access the file data in order to generate an answer to the question of the first user A. In addition, the access to the file data by the first user A and the access to the file data by the information processing apparatus 12 are different in the degree of restriction or the range of restriction. Therefore, the access rights are separately managed for the access of the first user A to the file data and the access of the information processing apparatus 12 to the file data. Therefore, in the present exemplary embodiment, even in a case where the viewing of certain file data by the user is restricted, it is possible to generate an answer to the question of the user using the file data. Specifically, in a case of acquiring the file data related to the question data from the database 120, the information processing apparatus 12 searches the database 120 to acquire the file data, regardless of the access right of the first user A. Then, the information processing apparatus 12 generates the answer data to the question data using the acquired file data. In this case, the information processing apparatus 12 presents the answer data to the first user A in the following case: at least one or a part of the file data acquired from the database 120 is file data to which the first user A does not have the access right; and the presentation of the answer data to the first user A is permitted by the second user B or the system. In addition, the control of the use of the file data in the generation of the answer data includes not only the control of the use of all of the file data related to the question data but also the control of the use of a part of the file data. On the other hand, in a case where all of the acquired file data is file data to which the first user A has the access right, the information processing apparatus 12 presents the answer data to the first user A.

A plurality of file data items are stored in the database 120. In addition, the file data stored in the database 120 is document file data, video file data, or the like. The file data stored in the database 120 may be in any format.

A known large language model is stored in the large language model storage unit 126. The large language model is constructed in advance by a known machine learning technology and a known artificial intelligence technology.

The user data storage unit 128 stores data indicating the access right to the file data for each of a plurality of users. The access right according to the present exemplary embodiment indicates whether or not the user can view the file data. Therefore, the user having the access right to the file data means that the user can view the file data. In addition, the access right may indicate whether or not the user can edit the file data or whether or not the user can share the file data with other users. For example, the user data storage unit 128 stores data shown in Fig. 4. Data related to the confidentiality of the file data is also stored in table data shown in Fig. 4. In addition, the access right may be set not for each file data item, but for a part (for example, the first to fourth lines of page 4) of the file data.

Next, a specific process performed by the question answering system 10 according to the present exemplary embodiment configured as described above will be described.

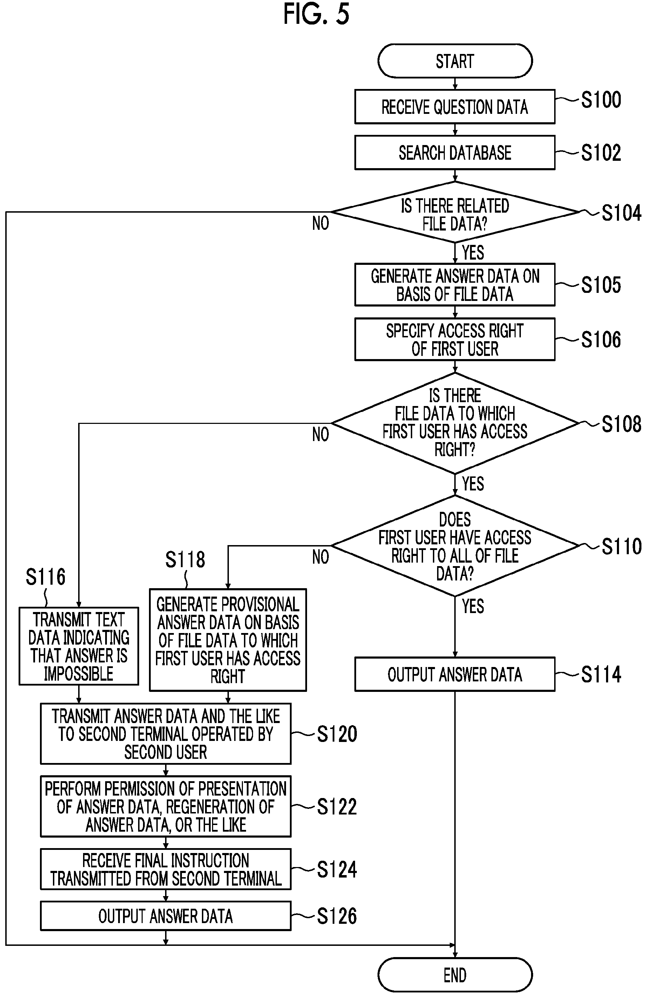

First, in the information processing apparatus 12, the CPU 14A reads out an information processing program from the ROM 14B or the storage 14D, deploys the information processing program in the RAM 14C, and executes the information processing program to perform information processing shown in Fig. 5.

In Step S100, the CPU 14A serving as the receiving unit 122 receives the question data transmitted by the operation of the first terminal 14 by the first user A.

In Step S102, the CPU 14A serving as the search unit 124 searches the database 120, in which a plurality of file data items are stored, to acquire the file data related to the question data from the database 120. In addition, the search unit 124 acquires the file data related to the question data using vector search based on a known retrieval-augmented generation (RAG) architecture.

In Step S104, the CPU 14A serving as the specification unit 130 determines whether or not file data related to the question data received in Step S100 is present in the database 120 on the basis of the search result obtained in Step S102. In addition, for example, the specification unit 130 determines whether or not the file data whose text similarity to the question data is equal to or greater than a preset threshold value is present. In a case where the file data related to the question data is present in the database 120, the process proceeds to Step S106. On the other hand, in a case where the file data related to the question data is not present in the database 120, the process is ended.

In Step S105, the CPU 14A serving as the generation unit 132 inputs the file data, which is the search result obtained in Step S102, and a prompt for an instruction to generate answer data to the question data to the large language model stored in the large language model storage unit 126 to generate the answer data to the question data.

In Step S106, the CPU 14A serving as the specification unit 130 acquires information of the access right added in advance to the file data included in the search result obtained in Step S102 with reference to the user data storage unit 128. Then, the specification unit 130 specifies the access right of the first user A to the file data included in the search result.

In Step S108, the CPU 14A serving as the specification unit 130 determines whether or not the file data, to which the first user A has the access right, is present in the file data which is the search result obtained in Step S102 on the basis of the result obtained in Step S106. In a case where the file data to which the first user A has the access right is present in the file data which is the search result, the process proceeds to Step S110. On the other hand, in a case where the file data to which the first user A has the access right is not present in the file data which is the search result, the process proceeds to Step S116.

In Step S110, the CPU 14A serving as the specification unit 130 determines whether or not the first user A has the access right to all of the file data which is the search result obtained in Step S102. In a case where the first user A has the access right to all of the file data which is the search result, the process proceeds to Step S114. On the other hand, in a case where the first user A has the access right to a part of the file data which is the search result, the process proceeds to Step S118.

In Step S114, the CPU 14A serving as the output unit 134 transmits the answer data generated in Step S105 to the first terminal 14. The first user A who operates the first terminal 14 checks the answer data presented on the display unit 14F of the first terminal 14. Therefore, the answer data based on the file data corresponding to the access right of the first user A is presented to the first user A.

In Step S116, the CPU 14A serving as the output unit 134 first transmits text data indicating that it is impossible to answer the question to the first terminal 14.

In Step S118, the CPU 14A serving as the generation unit 132 generates provisional answer data which is a provisional answer to the question data, on the basis of the file data, to which the first user A has the access right, among the file data items included in the search result obtained in Step S102. In addition, the generation unit 132 inputs the file data to which the first user A has the access right and a prompt for an instruction to generate the provisional answer data to the question data to the large language model stored in the large language model storage unit 126 to generate the provisional answer data to the question data. In addition, in Step S118, the CPU 14A as the serving as output unit 134 first transmits the generated provisional answer data to the first terminal 14.

In Step S120, the CPU 14A serving as the change unit 136 transmits, to the second terminal 15, the answer data generated in Step S105, inquiry data indicating whether or not the answer data may be presented to the first user A, and inquiry data for changing the access right to the file data. Since the answer data generated in Step S105 is generated on the basis of the file data to which the first user A does not have the access right, an inquiry indicating whether or not the answer data may be presented to the first user A is presented to the second user B.

In Step S122, the CPU 14A serving as the change unit 136 performs the permission of the presentation of the answer data, the regeneration of the answer data, or the like for the second terminal 15.

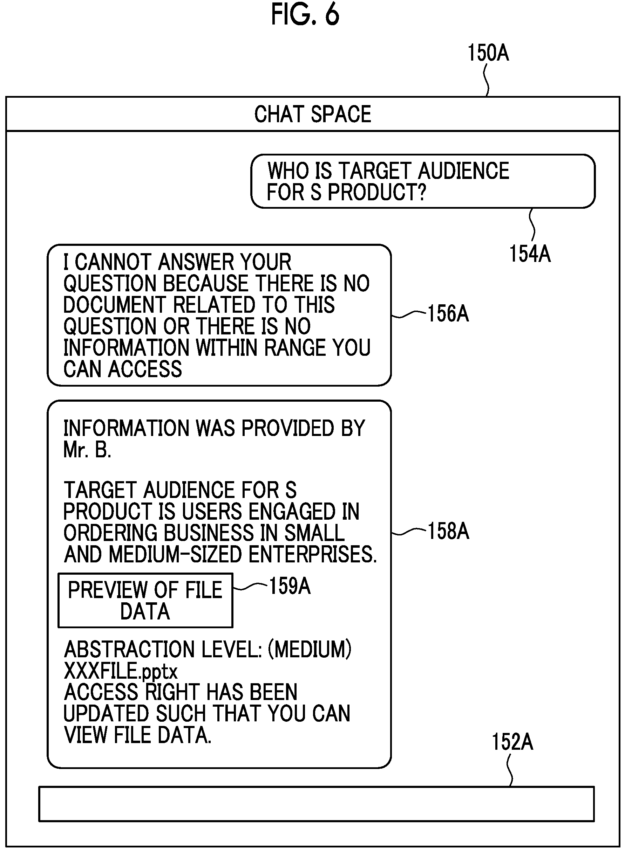

Hereinafter, each process, such as the permission of the presentation of the answer data or the regeneration of the answer data, will be described with reference to Figs. 6 to 11.

A question screen 150A shown in Fig. 6 is displayed on the display unit 14F of the first terminal 14 operated by the first user A. The first user A operates the first terminal 14 to input, for example, question data 154A to a box 152A of the question screen 150A. In a case where the specification unit 130 of the information processing apparatus 12 determines in Step S108 that the file data to which the first user A has the access right is not present, text data 156A (for example, the text data in Step S116) shown in Fig. 6 is transmitted to the first terminal 14 and displayed on the display unit 14F. Then, in a case where the second user B permits the presentation of the answer data to the first user A, for example, answer data 158A shown in Fig. 6 is transmitted to the first terminal 14 and displayed on the display unit 14F. In addition, the answer data 158A shown in Fig. 6 includes file data "XXX file" used in the generation of the answer data 158A and a preview 159A of the file data.

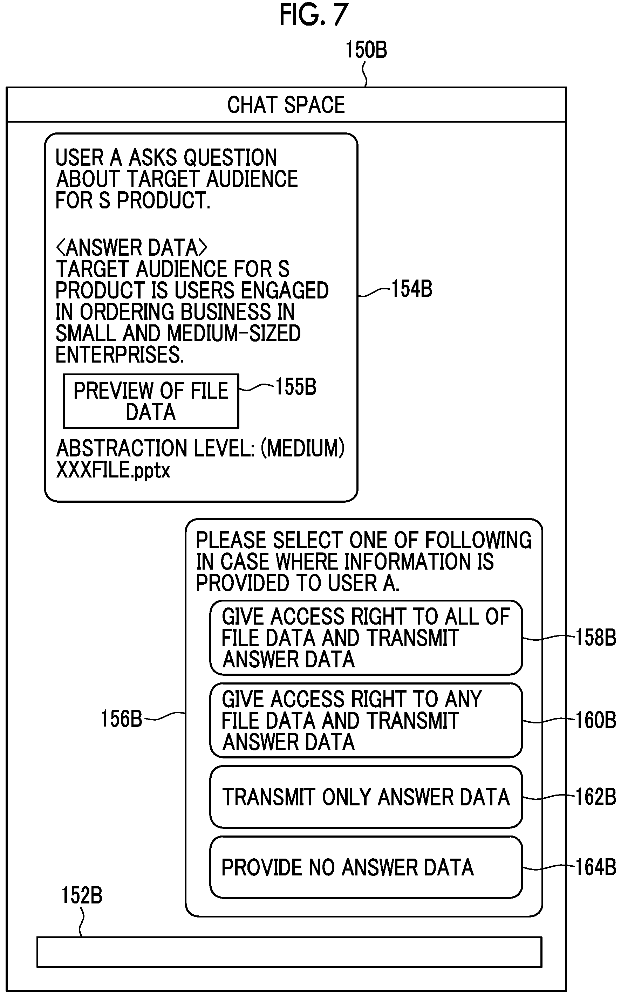

Fig. 7 shows an example of an inquiry screen 150B that is displayed on the display unit 15F of the second terminal 15 operated by the second user B. In addition, the second user B can input various types of data to the inquiry screen 150B through a box 152B.

In a case where the change unit 136 of the information processing apparatus 12 transmits the various types of data to the second terminal 15 in Step S120, text data 154B including the answer data generated in Step S105 is displayed on the display unit 15F of the second terminal 15 as shown in Fig. 7. In addition, the text data 154B shown in Fig. 7 includes file data "XXX file" used in the generation of the answer data and a preview 155B of the file data.

Further, as shown in Fig. 7, text data 156B including inquiry data indicating whether or not the answer data may be presented to the first user A and inquiry data for changing the access right to the file data is presented in the inquiry screen 150B.

The text data 156B includes four text data items 158B, 160B, 162B, and 164B. The text data 158B is text data for an instruction to give the access right to all of the file data included in the search result to the first user A and to transmit the answer data to the first user A. The text data 160B is text data for an instruction to give the access right to any file data included in the search result to the first user A and to transmit the answer data to the first user A. The text data 162B is text data for an instruction to transmit only the answer data to the first terminal 14 of the first user A. The text data 164B is text data for an instruction not to transmit the answer data to the first terminal 14.

The second user B operates the second terminal 15 to select any of the four text data items 158B, 160B, 162B, and 164B. Further, in a case where the text data 160B is selected, a screen for selecting which file data the first user A is given the access right to is further displayed.

For example, in a case where the second user B selects the text data 158B, the text data 158A shown in Fig. 6 is displayed on the display unit 14F of the first terminal 14.

In addition, the regeneration of the answer data may be executed before the permission of the presentation of the answer data and the change of the access right are executed.

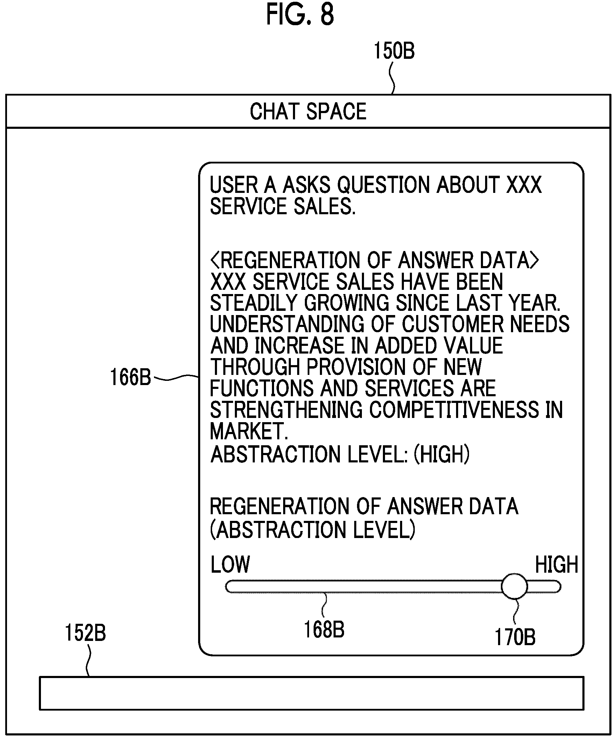

Fig. 8 is a diagram showing a case where an abstraction level of the answer data is changed to regenerate the answer data.

As shown in Fig. 8, the change unit 136 of the information processing apparatus 12 regenerates the answer data to the question data according to instruction data input from the second user B. As shown in Fig. 8, the instruction data input by the second user B is abstraction level data for an instruction to change the abstraction level of the answer data. More specifically, as shown in Fig. 8, the change unit 136 of the information processing apparatus 12 displays a range slider 168B for inputting a change in the abstraction level of the answer data on the display unit 15F of the second terminal 15 and acquires abstraction level data input from the second user B through a slider 170B of the range slider 168B. The change unit 136 of the information processing apparatus 12 regenerates the answer data to the question data according to the acquired abstraction level data. As shown in Fig. 8, in a case where the abstraction level is set to a high level, the answer data that does not include a specific number, a proper noun, and the like is generated. On the other hand, in a case where the abstraction level is set to a low level, the answer data including the specific number, the proper noun, and the like is generated.

Further, in a case where the abstraction level is set to a high level, the change unit 136 of the information processing apparatus 12 inputs, for example, a prompt "Please generate answer data without including specific descriptions such as numerical values and names of persons" to the large language model to regenerate the answer data. In addition, in a case where the abstraction level is set to a low level, the change unit 136 of the information processing apparatus 12 inputs, for example, a prompt "Please generate answer data including specific descriptions such as numerical values and names of persons" to the large language model to regenerate the answer data.

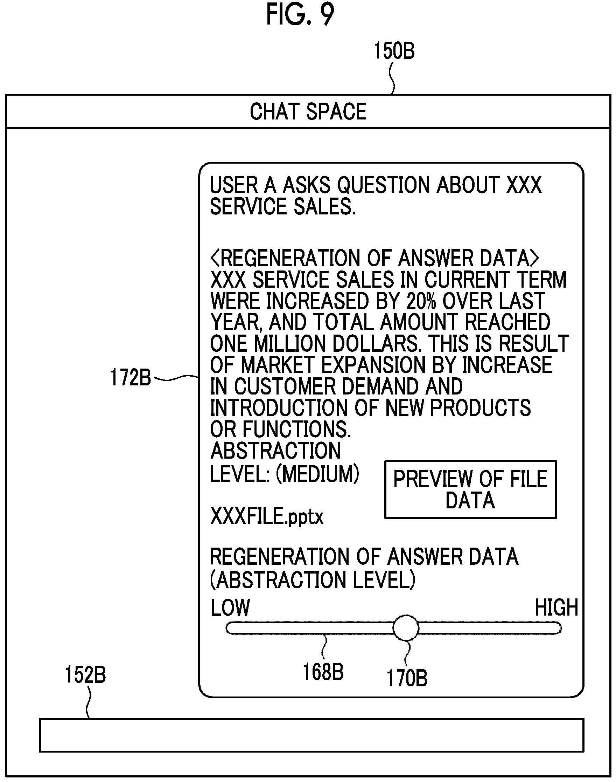

For example, the example shown in Fig. 9 is an example of the answer data in a case where the abstraction level is set to a "medium" level. As shown in Fig. 9, answer data 172B includes a number and a proper noun and is more specific answer data.

Further, in a case where the answer data is regenerated, the regeneration of the answer data may be executed in consideration of the access right of the first user A.

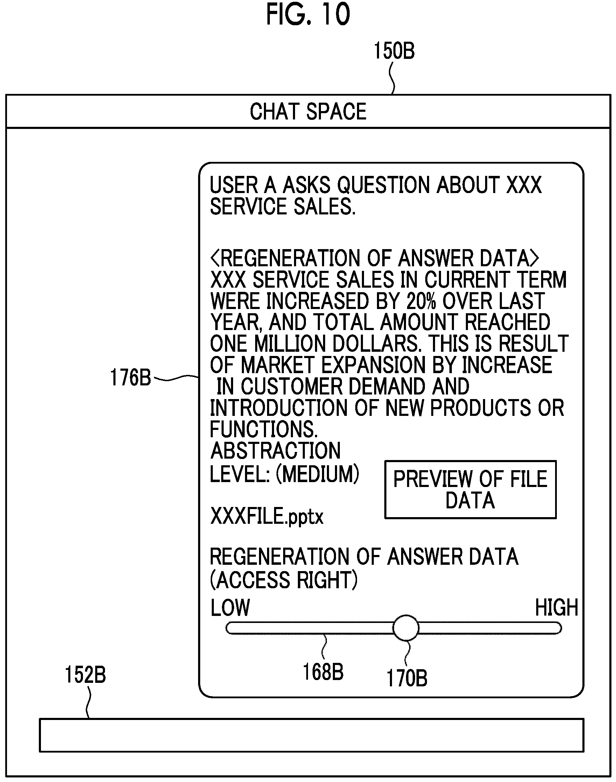

Fig. 10 is a diagram showing a case where the second user B changes the access right to the file data in the regeneration of the answer data.

As shown in Fig. 10, the change unit 136 of the information processing apparatus 12 regenerates the answer data to the question data according to use file change data which is instruction data input from the second user B. The use file change data is data for an instruction to change the file data used in the generation of the answer data or a range of use in the file data and is input by the operation of the slider 170B of the range slider 168B by the second user B. Specifically, the change unit 136 of the information processing apparatus 12 displays the range slider 168B for inputting a change in the file data used in the regeneration of the answer data or the range of use in the file data on the display unit 15F of the second terminal 15. Then, the change unit 136 of the information processing apparatus 12 acquires the use file change data input from the second user B through the slider 170B of the range slider 168B. The change unit 136 of the information processing apparatus 12 regenerates the answer data to the question data according to the acquired use file change data.

Further, in the range slider 168B shown in Fig. 10, a state in which the access right is at the highest level means that the access right stored in the user data storage unit 128 is achieved. Therefore, in a case where the slider 170B of the range slider 168B shown in Fig. 10 is moved in a "low" direction, the access right initially set for the first user A is relaxed, and it is possible to regenerate the answer data using a larger amount of file data.

Furthermore, in a case where the answer data is regenerated, the regeneration of the answer data may be executed on the basis of data input from an option button representing the abstraction level and an option button representing the access right.

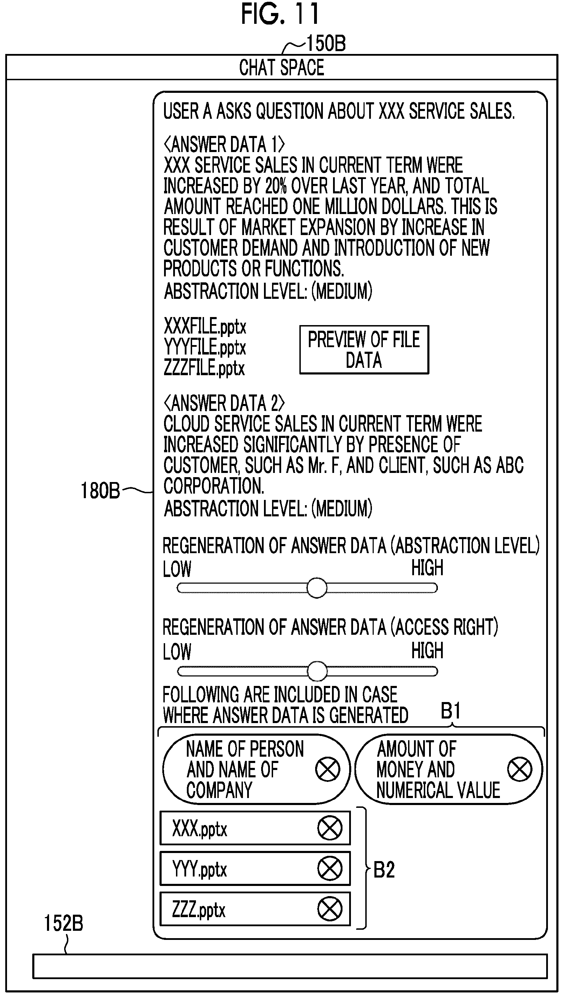

Fig. 11 is a diagram showing a case where the answer data is regenerated on the basis of the data input from the option button.

As shown in Fig. 11, the change unit 136 of the information processing apparatus 12 displays an option button B 1 for inputting a change in the abstraction level of the answer data and an option button B2 for selecting file data used in the generation of the answer data on the display unit 15F of the second terminal 15.

Then, the change unit 136 of the information processing apparatus 12 acquires the abstraction level data input from the second user B through the option button B 1. In addition, the change unit 136 of the information processing apparatus 12 acquires the use file change data input from the second user B through the option button B2.

Then, the change unit 136 of the information processing apparatus 12 regenerates the answer data to the question data according to the abstraction level data acquired through the option button B1 and the use file change data acquired through the option button B2.

In addition, for example, the change unit 136 of the information processing apparatus 12 appropriately creates the following prompt and inputs the prompt to the large language model to generate or regenerate the answer data.

Please consider the answer to the question on the basis of the following text.

### <Question>

What are cloud service sales in the current term?

### <Text>

(1) Increased by 20% over last year ... file 1.p5
(2) As a customer, Mr. F ... file 2.xlsx p5
(3) The XX service market is ... file 3.pptx

In this way, the permission of the presentation of the answer data, the change of the access right, the regeneration of the answer data, and the like are executed. In a case where the information processing apparatus 12 receives the final instruction signal from the second terminal 15 operated by the second user B, the information processing apparatus 12 outputs the answer data and the like corresponding to the final instruction signal to the first terminal 14.

Therefore, in Step S124, the CPU 14A serving as the change unit 136 receives the final instruction signal output from the second terminal 15.

In Step S126, the CPU 14A serving as the output unit 134 outputs the final answer data and the like to the first terminal 14. The final answer data and the like are displayed on the display unit 14F of the first terminal 14 operated by the first user A.

Further, in a case where the use file change data used in the generation of the answer data for the first user A is changed by the second user B, the change unit 136 of the information processing apparatus 12 may update the past answer data according to the changed use file change data. In addition, in a case where the first user A does not have the access right to the file data which is referred to in the generation of the answer data, the change unit 136 of the information processing apparatus 12 may process the file data, which is referred to, to generate new file data and may generate the answer data on the basis of the new file data.

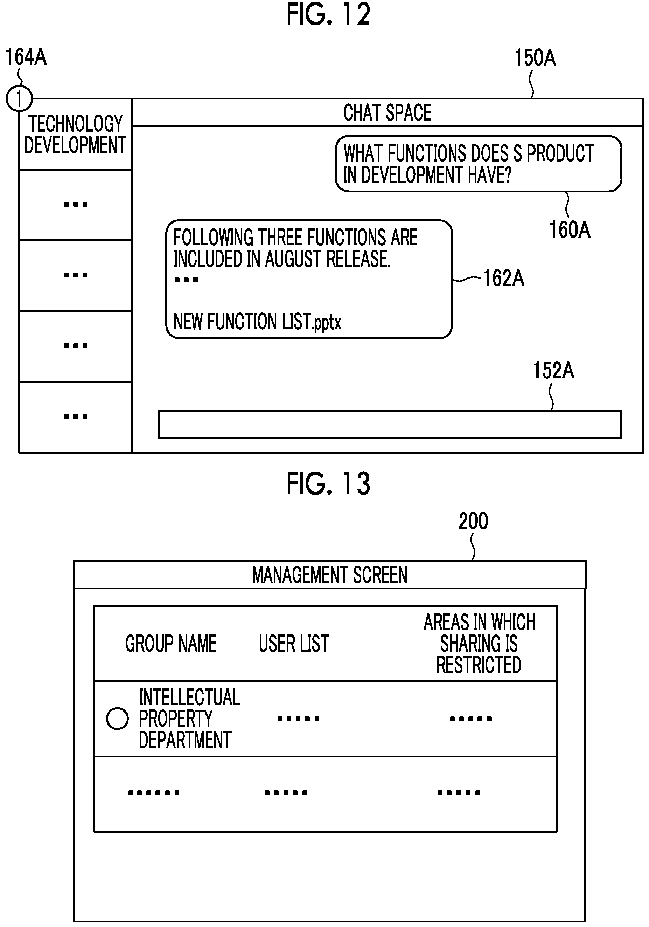

Fig. 12 is a diagram showing the update of the past answer data and the generation of new file data. For example, in a case where the use file change data used in the generation of the answer data for the first user A is changed, the information processing apparatus 12 updates the past answer data according to the changed use file change data. Then, as shown in Fig. 12, the information processing apparatus 12 displays an update notification 164Afor the past answer data on the display unit 14F of the first terminal 14. For example, in a case where the first user A selects the update notification 164A, the answer data obtained by updating the past answer data is displayed. In addition, as shown in Fig. 12, in a case where it is impossible to use, for example, the "XXX file" from the access right of the first user Ain the generation of the answer data to question data 160A, the information processing apparatus 12 may generate a new file "new function list.pptx" obtained by extracting a range that the first user A can access without any problems from the "XXX file" and may generate the answer data on the basis of the new file "new function list.pptx".

In addition, for example, the second user B may set rules in advance such that the answer and the access right are automatically set. For example, answering, the update of the access right, or the like may be performed for each user through a management screen 200 shown in Fig. 13. In this case, the information processing apparatus 12 refers to setting data related to the regeneration of the answer data in a case of regenerating the answer data. For example, the setting data is set through the management screen 200 shown in Fig. 13. In a case where the setting data indicates that the answer data is regenerated according to preset conditions, the information processing apparatus 12 regenerates the answer data according to the preset conditions without presenting the answer data to the second user B. Then, the information processing apparatus 12 presents the regenerated answer data to the first user A.

### <Modification Examples>

In addition, the present invention is not limited to the above-described exemplary embodiment, and various modifications and applications are possible without departing from the gist of the present invention.

For example, in the above-described exemplary embodiment, the case where the large language model stored in the large language model storage unit 126 is used in both the generation of the first version of the answer data and the regeneration of the answer data has been described as an example. However, the present disclosure is not limited thereto. For example, different large language models may be used in the generation of the first version of the answer data and the regeneration of the answer data.

In addition, in the above-described exemplary embodiment, the case where the information processing apparatus 12 stores the large language model in the large language model storage unit 126 which is the storage unit of the information processing apparatus 12 has been described as an example. However, the present invention is not limited thereto. For example, the information processing apparatus 12 may use a large language model that is provided from an external large language model system different from the information processing apparatus 12 via the communication line 16.

In addition, in the above-described exemplary embodiment, the following case has been described as an example: in the generation of the answer data using the file data to which it is preset whether or not the user has the access right related to viewing, in a case where access to the file data is restricted or prohibited by the access right of the user, the use of the file data in the generation of the answer data is controlled independently of the control of the access right. However, the present disclosure is not limited thereto. For example, in a case where the access right of the user is set for the process of searching the database 120, the use of the file data in the generation of the answer data may be controlled independently of the control of the access right in the execution of the process of searching the database 120. In this case, the process of searching the file data by the user and the use of the file data in the generation of the answer to the question of the user are independent of each other. In this case, the information processing apparatus 12 generates the answer data by controlling the use of the file data in the generation of the answer data, independently of the control of the access right of the user in the execution of the process of searching the database 120 in which the file data is stored. In this case, in the acquisition of the file data related to the question data from the database 120, the information processing apparatus 12 searches the database to acquire the file data related to the question data regardless of the access right set for the user. Further, in this case, the access right to be processed in Step S106, Step S108, Step S 110, and Step S118 of the information processing shown in Fig. 5 executed by the information processing apparatus 12 is an access right related to the search of the user.

In the embodiments above, the term "processor" refers to hardware in a broad sense. Examples of the processor include general processors (e.g., CPU: Central Processing Unit) and dedicated processors (e.g., GPU: Graphics Processing Unit, ASIC: Application Specific Integrated Circuit, FPGA: Field Programmable Gate Array, and programmable logic device).

In the embodiments above, the term "processor" is broad enough to encompass one processor or plural processors in collaboration which are located physically apart from each other but may work cooperatively. The order of operations of the processor is not limited to one described in the embodiments above, and may be changed.

In addition, the "system" in the present exemplary embodiment is described as an example of a system configured by a plurality of apparatus, but may be configured by a single apparatus having some functions of the plurality of apparatus.

Further, the process performed by the information processing apparatus 12 according to the above-described exemplary embodiment may be a process performed by software, a process performed by hardware, or a combination of the processes. Furthermore, the process performed by the information processing apparatus 12 may be stored as a program in a storage medium and then distributed. The present invention can also be applied to a program and a program product.

In addition, the present disclosure is not limited to the above description, and it goes without saying that various modifications other than the above description can be made without departing from the gist of the present disclosure.

For the above-described exemplary embodiment, the following supplementary notes will be further disclosed.

### (Supplementary Notes)

(((1))) An information processing system comprising:
   a processor configured to:
   receive question data input from a user;
   in generation of answer data to the question data using file data to which it is preset whether or not the user has an access right, in a case where access to the file data is restricted or prohibited by the access right of the user, control the use of the file data in the generation of the answer data independently of control of the access right to generate the answer data; and
   present the answer data to the user.
(((2))) The information processing system according to (((1))),
   wherein the user is a first user, and
   the processor is configured to:
      in a case where file data related to the question data is acquired from a database, acquire the file data related to the question data from the database regardless of the access right;
      generate answer data to the question data using the acquired file data;
      present the answer data to the first user in a case where at least one of the acquired file data is file data to which the first user does not have an access right and the presentation of the answer data to the first user is permitted by a second user or a system; and
      present the answer data to the first user in a case where the acquired file data is file data to which the first user has an access right.
(((3))) The information processing system according to (((1))) or (((2))),
   wherein the user is a first user, and
   the processor is configured to:
      present the answer data to a second user after generating the answer data;
      regenerate answer data to the question data according to instruction data input from the second user; and
      present the regenerated answer data to the first user.
(((4))) The information processing system according to (((3))),
   wherein the instruction data is abstraction level data for an instruction to change an abstraction level of the answer data, and
   the processor is configured to:
      regenerate answer data to the question data according to the abstraction level data; and
      present the regenerated answer data to the first user.
(((5))) The information processing system according to (((3))),
   wherein the instruction data is use file change data for an instruction to change the file data used in the generation of the answer data or to change a range of use in the file data, and
   the processor is configured to:
      regenerate answer data to the question data according to the use file change data; and
      present the regenerated answer data to the first user.
(((6))) The information processing system according to (((4))), wherein the processor is configured to:
   display a range slider for inputting a change in the abstraction level of the answer data on a display unit; and
   acquire the abstraction level data input from the second user through the range slider.
(((7))) The information processing system according to (((5))), wherein the processor is configured to:
   display a range slider for inputting a change in the file data used in the generation of the answer data or a change in the range of use in the file data on a display unit; and
   acquire the use file change data input from the second user through the range slider.
(((8))) The information processing system according to (((4))), wherein the processor is configured to:
   display an option button for inputting a change in the abstraction level of the answer data on a display unit; and
   acquire the abstraction level data input from the second user through the option button.
(((9))) The information processing system according to (((5))), wherein the processor is configured to:
   display an option button for selecting the file data used in the generation of the answer data on a display unit; and
   acquire the use file change data input from the second user through the option button.
(((10))) The information processing system according to any one of (((3))) to (((9))), wherein the processor is configured to:
   in a case where the answer data is regenerated, refer to setting data related to the regeneration of the answer data;
   in a case where the setting data indicates that the answer data is regenerated according to a preset condition, regenerate the answer data according to the preset condition without presenting the answer data to the second user; and
   present the regenerated answer data to the first user.
(((11))) The information processing system according to (((5))) or (((7))), wherein the processor is configured to:
   in a case where the use file change data is changed, update past answer data according to the changed use file change data.
(((12))) An information processing program causing a computer to execute a process comprising:
   receiving question data input from a user;
   in generation of answer data to the question data using file data to which it is preset whether or not the user has an access right, in a case where access to the file data is restricted or prohibited by the access right of the user, controlling the use of the file data in the generation of the answer data independently of control of the access right to generate the answer data; and
   presenting the answer data to the user.
(((13))) An information processing system comprising:
   a processor configured to:
   receive question data input from a user;
   in generation of answer data to the question data using file data to which it is preset whether or not the user has an access right, control the use of the file data in the generation of the answer data independently of control of an access right in execution of a process of searching a database, in which the file data is stored, to generate the answer data; and
   present the answer data to the user.
(((14))) The information processing system according to (((13))),
   wherein the user is a first user, and
   the processor is configured to:
      in a case where file data related to the question data is acquired from the database, search the database regardless of the access right to acquire the file data related to the question data;
      generate answer data to the question data using the acquired file data;
      present the answer data to the first user in a case where at least one of the acquired file data is file data to which the first user does not have an access right and the presentation of the answer data to the first user is permitted by a second user or a system; and
      present the answer data to the first user in a case where the acquired file data is file data to which the first user has an access right.
(((15))) The information processing system according to (((13))) or (((14))),
   wherein the user is a first user, and
   the processor is configured to:
      present the answer data to the second user after generating the answer data;
      regenerate answer data to the question data according to instruction data input from the second user; and
      present the regenerated answer data to the first user.
(((16))) The information processing system according to (((15))),
   wherein the instruction data is abstraction level data for an instruction to change an abstraction level of the answer data, and
   the processor is configured to:
      regenerate answer data to the question data according to the abstraction level data; and
      present the regenerated answer data to the first user.
(((17))) The information processing system according to (((15))),
   wherein the instruction data is use file change data for an instruction to change the file data used in the generation of the answer data or to change a range of use in the file data, and
   the processor is configured to:
      regenerate answer data to the question data according to the use file change data; and
      present the regenerated answer data to the first user.
(((18))) The information processing system according to (((16))), wherein the processor is configured to:
   display a range slider for inputting a change in the abstraction level of the answer data on a display unit; and
   acquire the abstraction level data input from the second user through the range slider.
(((19))) The information processing system according to (((17))), wherein the processor is configured to:
   display a range slider for inputting a change in the file data used in the generation of the answer data or the range of use in the file data on a display unit; and
   acquire the use file change data input from the second user through the range slider.
(((20))) The information processing system according to (((16))), wherein the processor is configured to:
   display an option button for inputting a change in the abstraction level of the answer data on a display unit; and
   acquire the abstraction level data input from the second user through the option button.
(((21))) The information processing system according to (((17))), wherein the processor is configured to:
   display an option button for selecting the file data used in the generation of the answer data on a display unit; and
   acquire the use file change data input from the second user through the option button.
(((22))) The information processing system according to (((14))), wherein the processor is configured to:
   in a case where the answer data is regenerated, refer to setting data related to regeneration of the answer data;
   in a case where the setting data indicates that the answer data is regenerated according to a preset condition, regenerate the answer data according to the preset condition without presenting the answer data to the second user; and
   present the regenerated answer data to the first user.
(((23))) The information processing system according to (((17))) or (((19))), wherein the processor is configured to:
   in a case where the use file change data is changed, update past answer data according to the changed use file change data.
(((24))) An information processing program causing a computer to execute a process comprising:
   receiving question data input from a user;
   in generation of answer data to the question data using file data to which it is preset whether or not the user has an access right, controlling the use of the file data in the generation of the answer data independently of control of an access right in execution of a process of searching a database, in which the file data is stored, to generate the answer data; and
   presenting the answer data to the user.

According to (((1))), (((12))), (((13))), or (((24))), in a case where the answer to the question is generated using the file data, it is possible to improve flexibility in the generation of the answer, as compared to a case where the generation of the answer is restricted according to the access right of the user, who has asked the question, to the file data.

According to (((2))) or (((14))), it is possible to generate the answer using a larger amount of file data.

According to (((3))) or (((15))), the answer checked by a user different from the user who has asked the question can be presented to the user who has asked the question.

According to (((4))) or (((16))), it is possible to generate the answer data whose abstraction level has been changed in response to an instruction from a user different from the user who has asked the question.

According to (((5))) or (((17))), it is possible to change the file data used in the generation of the answer data in response to an instruction from a user different from the user who has asked the question.

According to (((6))) or (((18))), in a case of changing the abstraction level of the answer data, a user different from the user who has asked the question can more easily change the abstraction level of the answer data.

According to (((7))) or (((19))), in a case of changing the file data used to generate the answer data, a user different from the user who has asked the question can more easily change the file data used to generate the answer data.

According to (((8))) or (((20))), in a case of changing the abstraction level of the answer data, a user different from the user who has asked the question can more easily change the abstraction level of the answer data.

According to (((9))) or (((21))), in a case of changing the file data used to generate the answer data, a user different from the user who has asked the question can more easily change the file data used to generate the answer data.

According to (((10))) or (((22))), it is possible to reduce the frequency with which a user different from the user who has asked the question checks the regeneration of the answer data.

According to (((11))) or (((23))), the user who has asked the question can check the past answer data updated according to a newly set access right.

The foregoing description of the exemplary embodiments of the present invention has been provided for the purposes of illustration and description. It is not intended to be exhaustive or to limit the invention to the precise forms disclosed. Obviously, many modifications and variations will be apparent to practitioners skilled in the art. The embodiments were chosen and described in order to best explain the principles of the invention and its practical applications, thereby enabling others skilled in the art to understand the invention for various embodiments and with the various modifications as are suited to the particular use contemplated. It is intended that the scope of the invention be defined by the following claims and their equivalents.

### Brief Description of the Reference Symbols

10: question answering system
12: information processing apparatus
12D: storage
12E: operation unit
12F: display unit
12G: communication line I/F unit
12I: system bus
14: first terminal
14D: storage
14E: operation unit
164A: update notification
14F: display unit
14G: communication line I/F unit
15: second terminal
15D: storage
15E: operation unit
15F: display unit
15G: communication line I/F unit
16: communication line
120: database
122: receiving unit
124: search unit
126: large language model storage unit
128: user data storage unit
130: specification unit
132: generation unit
134: output unit
136: change unit

## Claims

1. An information processing system comprising:
a processor configured to:
receive question data input from a user;
in generation of answer data to the question data using file data to which it is preset whether or not the user has an access right, in a case where access to the file data is restricted or prohibited by the access right of the user, control the use of the file data in the generation of the answer data independently of control of the access right to generate the answer data; and
present the answer data to the user.

2. The information processing system according to claim 1,
wherein the user is a first user, and
the processor is configured to:
in a case where file data related to the question data is acquired from a database, acquire the file data related to the question data from the database regardless of the access right;
generate answer data to the question data using the acquired file data;
present the answer data to the first user in a case where at least one of the acquired file data is file data to which the first user does not have an access right and the presentation of the answer data to the first user is permitted by a second user or a system; and
present the answer data to the first user in a case where the acquired file data is file data to which the first user has an access right.

3. The information processing system according to claim 1 or 2,
wherein the user is a first user, and
the processor is configured to:
present the answer data to a second user after generating the answer data;
regenerate answer data to the question data according to instruction data input from the second user; and
present the regenerated answer data to the first user.

4. The information processing system according to claim 3,
wherein the instruction data is abstraction level data for an instruction to change an abstraction level of the answer data, and
the processor is configured to:
regenerate answer data to the question data according to the abstraction level data; and
present the regenerated answer data to the first user.

5. The information processing system according to claim 3,
wherein the instruction data is use file change data for an instruction to change the file data used in the generation of the answer data or to change a range of use in the file data, and
the processor is configured to:
regenerate answer data to the question data according to the use file change data; and
present the regenerated answer data to the first user.

6. The information processing system according to claim 4, wherein the processor is configured to:
display a range slider for inputting a change in the abstraction level of the answer data on a display unit; and
acquire the abstraction level data input from the second user through the range slider.

7. The information processing system according to claim 5, wherein the processor is configured to:
display a range slider for inputting a change in the file data used in the generation of the answer data or a change in the range of use in the file data on a display unit; and
acquire the use file change data input from the second user through the range slider.

8. The information processing system according to claim 4, wherein the processor is configured to:
display an option button for inputting a change in the abstraction level of the answer data on a display unit; and
acquire the abstraction level data input from the second user through the option button.

9. The information processing system according to claim 5, wherein the processor is configured to:
display an option button for selecting the file data used in the generation of the answer data on a display unit; and
acquire the use file change data input from the second user through the option button.

10. The information processing system according to any one of claims 3 to 9, wherein the processor is configured to:
in a case where the answer data is regenerated, refer to setting data related to the regeneration of the answer data;
in a case where the setting data indicates that the answer data is regenerated according to a preset condition, regenerate the answer data according to the preset condition without presenting the answer data to the second user; and
present the regenerated answer data to the first user.

11. The information processing system according to claim 5 or 7, wherein the processor is configured to:
in a case where the use file change data is changed, update past answer data according to the changed use file change data.

12. An information processing program causing a computer to execute a process comprising:
receiving question data input from a user;
in generation of answer data to the question data using file data to which it is preset whether or not the user has an access right, in a case where access to the file data is restricted or prohibited by the access right of the user, controlling the use of the file data in the generation of the answer data independently of control of the access right to generate the answer data; and
presenting the answer data to the user.

13. An information processing system comprising:
a processor configured to:
receive question data input from a user;
in generation of answer data to the question data using file data to which it is preset whether or not the user has an access right, control the use of the file data in the generation of the answer data independently of control of an access right in execution of a process of searching a database, in which the file data is stored, to generate the answer data; and
present the answer data to the user.

14. The information processing system according to claim 13,
wherein the user is a first user, and
the processor is configured to:
in a case where file data related to the question data is acquired from the database, search the database regardless of the access right to acquire the file data related to the question data;
generate answer data to the question data using the acquired file data;
present the answer data to the first user in a case where at least one of the acquired file data is file data to which the first user does not have an access right and the presentation of the answer data to the first user is permitted by a second user or a system; and
present the answer data to the first user in a case where the acquired file data is file data to which the first user has an access right.

15. An information processing program causing a computer to execute a process comprising:
receiving question data input from a user;
in generation of answer data to the question data using file data to which it is preset whether or not the user has an access right, controlling the use of the file data in the generation of the answer data independently of control of an access right in execution of a process of searching a database, in which the file data is stored, to generate the answer data; and
presenting the answer data to the user.
